(19) Europäisches Patentamt

European Patent Office

Office européen des brevets

(11) **EP 1 082 774 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(21) Anmeldenummer: **99924989.9**

(22) Anmeldetag: **17.05.1999**

(51) Int Cl.$^7$: **H01M 8/06**

(86) Internationale Anmeldenummer:
**PCT/EP99/03378**

(87) Internationale Veröffentlichungsnummer:
**WO 99/060647 (25.11.1999 Gazette 1999/47)**

(54) **BRENNSTOFFZELLENSYSTEM UND VERFAHREN ZUM ERZEUGEN ELEKTRISCHER ENERGIE MITTELS EINES BRENNSTOFFZELLENSYSTEMS**

FUEL CELL SYSTEM AND METHOD FOR GENERATING ELECTRICAL ENERGY USING A FUEL CELL SYSTEM

SYSTEME DE PILE A COMBUSTIBLE ET PROCEDE POUR PRODUIRE DE L'ENERGIE ELECTRIQUE AU MOYEN D'UN TEL SYSTEME

(84) Benannte Vertragsstaaten:
**DE ES FR GB IT SE**

(30) Priorität: **20.05.1998 DE 19822691**

(43) Veröffentlichungstag der Anmeldung:
**14.03.2001 Patentblatt 2001/11**

(73) Patentinhaber:
• **Volkswagen Aktiengesellschaft**
  **38436 Wolfsburg (DE)**
• **AB VOLVO**
  **405 08 Göteborg (SE)**

(72) Erfinder:
• **DÜBEL, Olaf**
  **D-38550 Isenbüttel (DE)**
• **KÖNIG, Axel**
  **D-38448 Wolfsburg (DE)**
• **EKDUNGE, Per**
  **S-412 79 Göteborg (SE)**
• **ALIN, Peter**
  **S-261 39 Landskrona (SE)**
• **REINKINGH, Jessica, Grace**
  **Frazer, PA 19355 (US)**
• **MALLANT, Ronald**
  **NL-1824 GP Alkmaar (NL)**

(56) Entgegenhaltungen:
**EP-A- 0 833 401       US-A- 4 657 829**
**US-A- 5 360 679       US-A- 5 658 681**

**Beschreibung**

Die Erfindung betrifft ein Brennstoffzellensystem, insbesondere als Antriebssystem eines Kraftfahrzeuges, mit einer Reformereinheit zum Erzeugen von Wasserstoff aus einem Energieträger, insbesondere einem flüssigen Rohstoff unter Zufuhr von Luft zum Betreiben einer nachgeschalteten Brennstoffzelleneinheit, wobei zwischen Reformereinheit und Brennstoffzelleneinheit eine Oxidationseinrichtung zum Umwandeln von Kohlenmonoxid in Kohlendioxid angeordnet ist, gemäß dem Oberbegriff des Anspruchs 1. Die Erfindung betrifft ferner Verfahren zum Erzeugen elektrischer Energie mittels eines Brennstoffzellensystems, insbesondere für ein Antriebssystem eines Kraftfahrzeuges, wobei zum Betreiben einer Brennstoffzelleneinheit Wasserstoff in einem Reformerprozeß aus einem Rohstoff unter Zufuhr von Luft erzeugt wird, wobei nach dem Reformerprozeß und vor der Brennstoffzelleneinheit Kohlenmonoxid zu Kohlendioxid oxidiert wird, gemäß dem Oberbegriff des Anspruchs 10.

Aus der EP 0 217 532 ist ein katalytischer Wasserstoffgenerator bekannt, welcher aus einem Methanol-Luft-Gemisch in einer autothermen Reformereinheit Wasserstoff erzeugt. Hierbei ist in der Reformereinheit ein Thermoelement angeordnet, welches eine Luftzufuhr in das Methanol-Luft-Gemisch derart beeinflußt, daß mit zunehmender Temperatur am Ort desThermoelementes im Reformer die Luftzufuhr reduziert wird.

In einer Weiterentwicklung dieser Anordnung beschreibt die WO 96/00186 einen Wasserstoffgenerator, wobei der Katalysator um ein Einlaßrohr für das Methanol-Luft-Gemisch derart angeordnet ist, daß das Methanol-Luft-Gemisch radial durch den Katalysator hindurchströmt.

Die DE 43 45 319 C2 und die DE 43 29 323 C2 beschreiben ein Brennstoffzellenstromerzeugungssystem, wobei aus einem Methanol-Wasser-Gemisch in einer Reformereinheit Wasserstoff erzeugt wird. Dieser Wasserstoff wird einer nachgeschalteten Brennstoffzelle zum Erzeugen elektrischer Energie zugeführt. Zum Erzeugen einer ausreichenden Reaktionswärme im Reformer wird ein Teil des Methanols nicht dem Methanol-Wasser-Gemisch zugefügt, sondern in einem zusätzlichen Brenner verbrannt.

Aus der DE 196 29 084 A1 ist ein Elektrofahrzeug mit einer Antriebsbatterie aus Brennstoffzellen bekannt, wobei die Brennstoffzellen derart angeordnet sind, daß diese von einem Fahrtwind gekühlt werden.

In dem Artikel "Heureka?" in der DE-Z Autotechnik Nr. 5/1997, Seiten 20/21 wird ein Kraftfahrzeug mit Brennstoffzellenantrieb beschrieben, wobei der zum Betrieb der Brennstoffzellen erforderliche Wasserstoff im Fahrzeug selbst aus Benzin gewonnen wird. In einem mehrstufigen Prozeß wird dabei das Benzin in Wasserstoff umgewandelt. Vor der Umwandlung wird das Benzin in einem Verdampfer durch Erhitzen in gasförmigen Zustand gebracht. In einemTeilverbrennungsreaktor entsteht unter Sauerstoffmangel Wasserstoff und Kohlenmonoxid. Zum Oxidieren des Kohlenmonoxids sind Kupferoxid- und Zinkoxid-Katalysatoren vorgesehen, wobei Wasserdampf als Sauerstofflieferant für die Reaktion zugeführt wird. In einem weiteren Schritt wird ein letzter Anteil von Kohlenmonoxid von ca. 1% in einem konventionellen Platin-Oxidationskatalysator unter Luftzufuhr nachverbrannt. Das so erhaltene Gemisch aus Wasserstoff, Kohlenmonoxid und Kohlendioxid enthält noch 10 ppm Kohlenmonoxid, was für eine nachgeschaltete Brennstoffzelle unbedenklich ist. Nach einer Abkühlung auf ca. 80 Grad Celsius in einem Wärmetauscher wird daher das Gas in die Brennstoffzelle geleitet.

Aus dem Artikel "Alternative Fuel" in der JP-Zeitschrift Asia-Pacific Automotive Report, 20.01.1998, Vol. 272, Seite 34 bis 39 ist ein ähnliches Brennstoffzellensystem für Kraftfahrzeuge bekannt, wobei eine Methanolreformereinheit zum Erzeugen von Wasserstoff für eine Brennstoffzelle vorgesehen ist. Hierbei wird bei der elektrochemischen Reaktion von Wasserstoff und Sauerstoff erzeugtes Wasser für den Reformerprozeß wiederverwendet. Für den Reformerprozeß wird deionisiertes Wasser und Methanol gemischt, verdampft und in Wasserstoff und Kohlendioxid bei einer Temperatur von 250 Grad Celsius umgewandelt. Dieser Wasserstoff wird einer Brennstoffzelle zugeführt, welche diesen zusammen mit Luftsauerstoff in einemkatalytischen Prozeß in elektrische Energie und Wasser umwandelt. Die zum Verdampfen und für den Reformerprozeß erforderliche Wärmeenergie wird in einem der Brennstoffzelle nachgeschalteten katalytischen Brenner erzeugt, welcher mit Restgas aus der Brennstoffzeile betrieben wird. Dieses Gas enthält Wasserstoff, da die Brennstoffzellenanordnung lediglich etwa 75% des zugeführten Wasserstoffs verwertet. Sofern nicht genügend Restwasserstoff für den katalytischen Brenner zur Verfügung steht, wird Methanol aus dem Kraftstofftank zur Wärmegewinnung für den Reformer verwendet. Vor dem Einleiten des im Reformer erzeugten Gases mit Wasserstoffanteil, wird dieses Gas mittels einer katalytischen Reaktion gereinigt, wobei Kohlenmonoxid in Kohlendioxid umgesetzt wird. In einer dargestellten Ausführungsform eines Brennstoffzellensystems für ein Kraftfahrzeug umfaßt der Methanolreformer einen Verdampfer, einen Reformer und ein Oxidationseinheit für Kohlenmonoxid.

Die DE 43 22 765 C1 beschreibt ein Verfahren und eine Vorrichtung zur dynamischen Leistungsregelung für ein Fahrzeug mit Brennstoffzelle, welche eine eiektrische Antriebseinheit mit elektrischer Energie versorgt. Ausgehend von einer Leistungsanforderung entsprechend einer Fahrpedalstellung wird ein Luftmassenstrom berechnet, welcher zur Bereitstellung einer entsprechenden Solleistung seitens der Brennstoffzelle benötigt wird. Ein in einer Ansaugleitung der Brennstoffzelle angeordneter Kompressor wird entsprechend dem benötigten Luftstrom in seiner Drehzahl geregelt.

Aus der EP 0 629 013 B1 ist ein Verfahren und eine Vorrichtung zur Luftversorgung eines Brennstoffzellensystems bekannt. Hierbei wird eine Prozeßluft mittels eines Verdichters vor einem Eintritt in eine entsprechende Brennstoffzelle verdichtet. Nach dem Durchströmen der Brennstoffzelle wird die abgeführte Abluft zur Energierückgewinnung über eine Turbine entspannt, wobei die Turbine, der Verdichter und ein zusätzlicher Antriebsmotor auf einer gemeinsamen Welle angeordnet sind. Der Verdichter ist drehzahlveränderlich ausgebildet und mit einem Expander als Turbine zum Entspannen der Abluft auf einer gemeinsamen Welle angeordnet. Durch Verwendung eines Expanders mit veränderlichem Schluckvermögen erfolgt eine Luftstromregelung für die Brennstoffzelle.

Aus der WO 97/16648 ist ein Schraubenkompressor für einen Kühlschrank bekannt. Dieser Schraubenkompressor umfaßt zwei Pumpkammern, wobei ein Auslaß einer ersten Pumpkammer mit einem Sekundäreinlaß einer zweiten Pumpkammer verbunden ist.

Der vorliegenden Erfindung liegt die Aufgabe zugrunde, ein Brennstoffzellensystem der obengenannten Art derart weiter zu entwickeln, daß ein wirtschaftlicher und umweltfreundlicher Einsatz zum Erzeugen elektrischer Energie, insbesondere für ein Antriebssystem eines Kraftfahrzeuges, bei hohem Wirkungsgrad und kleinem Bauraum ermöglicht wird.

Diese Aufgabe wird erfindungsgemäß durch ein Brennstoffzellensystem der o.g. Art mit den in Anspruch 1 gekennzeichneten Merkmalen und durch ein Verfahren der o.g. Art mit den in An spruch 10 gekennzeichneten Merkmalen gelöst. Vorteilhafte Ausgestaltungen der Erfindung sind in den abhängigen Ansprüchen angegeben.

Dazu ist es bei einem Brennstoffzellensystem erfindungsgemäß vorgesehen, daß eine Wassereinspritzeinrichtung an der Oxidationseinrichtung vorgesehen ist, welche in diese Wasser einspritzt.

Dies hat den Vorteil, daß gleichzeitig mit der Entfernung von Kohlenmonoxid aus einem Prozeßgas aus der Reformereinheit mit hohem Wasserstoffanteil für die Brennstoffzelleneinheit eine ausreichende Abkühlung bzw. Vorkühlung erfolgt, so daß das Prozeßgas ohne eine aufwendige Kühleinrichtung bzw. mit einer entsprechend geringer aufwendigen Kühleinrichtung zur Brennstoffzelleneinheit geleitet werden kann. Ferner liefert das eingespritzte Wasser auch einen für die Oxidation von Kohlenmonoxid erforderlichen Sauerstoff, wobei gleichzeitig durch diese Oxidationsreaktion zusätzlich Wasserstoff freigesetzt wird, so daß eine separate Sauerstoffzuführung zur Oxidationseinrichtung mengenmäßig verringert werden kann und gleichzeitig ein Wasserstoffanteil im Prozeßgas erhöht wird. Bei gleicher Leistung kann durch die zusätzliche Wasserstoffanreicherung in der Oxidationseinrichtung das Brennstoffzellensystem kleiner dimensioniert werden. Dies reduziert in entsprechender Weise einen Bauraumbedarf sowie einen apparativen Aufwand des Brennstoffzellensystems.

In einer bevorzugten Ausführungsform weist die Reformereinheit einen Mischer für den Rohstoff und eine sauerstoffhaltige Substanz, insbesondere Wasser und/oder Luft, auf.

Einen geschlossenen Wasserkreislauf ohne die Notwendigkeit große Mengen Wasser für den Reformerprozeß mitführen zu müssen erzielt man dadurch, daß in einem Abgasstrom aus einer Kathode der Brennstoffzelleneinheit und/oder in einem Abgasstrom aus einer Anode derBrennstoffzelleneinheit eine Wasserseparationseinrichtung, insbesondere ein Kondensator, vorgesehen ist, welcher im entsprechenden Abgas enthaltenes Wasser absepariert und einer der autothermen Reformereinheit vorgeschalteten Wasserspeichereinrichtung zuführt.

In einer vorteilhaften Ausführungsform ist ein separater Wasserkreislauf vorgesehen, welcher die Wasserseparationseinrichtungen, die Brennstoffzelleneinheit, eine Luftzuführung an eine Kathode der Brennstoffzelleneinheit und/oder eine Luftzuführung an die Reformereinheit kühlt.

Zum Erzeugen einer entsprechenden, für die Reaktion in der Reformereinheit notwendigen Wärmeenergie ist ein katalytischer Brenner vorgesehen, welcher Abgas aus einer Anode der Brennstoffzelleneinheit verbrennt und entsprechende Abwärme der Reformereinheit über einen Wärmetauscher zuführt.

Eine alternative Wärmeerzeugung für die Reformereinheit erzielt man dadurch, daß der katalytische Brenner mit einem Vorratsbehälter für den Rohstoff verbunden ist.

Eine Energierückgewinnung erzielt man dadurch, daß in einem Abgasstrom einer Kathode der Brennstoffzelleneinheit ein Expander und in einem Zuluftstrom der Brennstoffzelleneinheit ein Kompressor, insbesondere ein zweistufiger Kompressor, vorgesehen ist, welche auf einer gemeinsamen Welle angeordnet sind.

Ein solcher zweistufiger Kompressor bzw. Verdichter erhöht die Umweltfreundlichkeit und den Wirkungsgrad des Brennstoffzellensystemes weiter, in dem über zwei abgreifbare Druckstufen Luftdrücke mit verschiedenem Niveau dem weiteren System zur Verfügung gestellt werden. Über eine erste Stufe mit einem relativ niedrigen Druck wird die Kathode der Brennstoffzelleneinheit beaufschlagt, während die mit einem höheren Druck versehene zweite Stufe zunächst der Reformereinheit zugeführt wird und aufgrund ihres relativ höheren Druckniveaus die im weiteren Weg auftretenen Druckverluste soweit kompensiert, daß die Brennstoffzelleneinheit auf der Anoden- und auf der Kathodenseite näherungsweise mit dem gleichen Druck beaufschlagt wird.

Zweckmäßigerweise ist der Rohstoff eine Wasserstoff enthaltende Substanz, insbesondere Methanol oder Benzin.

Bei einem Verfahren der o.g. Art ist eserfindungsgemäß vorgesehen ,daß bei der Oxidation von Kohlenmonoxid zu Kohlendioxid Wasser eingespritzt wird.

Dies hat den Vorteil, daß gleichzeitig mit der Entfernung von Kohlenmonoxid aus einem Prozeßgas aus dem Reformerprozeß mit hohem Wasserstoffanteil für die Brennstoffzelleneinheit eine ausreichende Abkühlung bzw. Vorkühlung erfolgt, so daß das Prozeßgas ohne eine aufwendige Kühleinrichtung bzw. mit einer entsprechend geringer aufwendigen Kühleinrichtung zur Brennstoffzelleneinheit geleitet werden kann. Ferner liefert das eingespritzte Wasser auch einen für die Oxidation von Kohlenmonoxid erforderlichen Sauerstoff, wobei gleichzeitig durch diese Oxidationsreaktion zusätzlich Wasserstoff freigesetzt wird, so daß eine separate Sauerstoffzuführung zur Oxidationseinrichtung mengenmäßig verringert werden kann und gleichzeitig ein Wasserstoffanteil im Prozeßgas erhöht wird. Bei gleicher Leistung kann durch die zusätzliche Wasserstoffanreicherung in der Oxidationseinrichtung das Brennstoffzellensystem kleiner dimensioniert werden. Dies reduziert in entsprechender Weise einen Bauraumbedarf sowie einen apparativen Aufwand des Brennstoffzellensystems.

Für einen hohen Wirkungsgrad der Wasserzuführung wird dieses dampfförmig oder aerosolförmig eingespritzt.

Eine zusätzliche Wirkungsgraderhöhung der Brennstoffzelleneinheit kann dadurch erzielt werden, daß einem Prozeßgas zwischen Oxidation von Kohlenmonoxid und Brennstoffzelleneinheit und/oder einer Kathode der Brennstoffzelleneinheit komprimierte Luft zugeführt wird.

Einen geschlossenen Wasserkreislauf ohne die Notwendigkeit große mengen Wasser für den Reformerprozeß mitführen zu müssen erzielt man dadurch, daß aus einem Abgasstrom aus einer Kathode der Brennstoffzelleneinheit und/oder aus einem Abgasstrom aus einer Anode der Brennstoffzelleneinheit Wasser separiert und dem Reformerprozeß zugeführt wird.

Zum Erzeugen einer entsprechenden, für die Reaktion des Reformerprozesses notwendigen Wärmeenergie wird ein Abgas aus einer Anode der Brennstoffzelleneinheit verbrannt und dem Reformerprozeß eine entsprechende Abwärme zugeführt.

Eine alternative Wärmeerzeugung für die Reformereinheit erzielt man dadurch, daß Rohstoff verbrannt und eine entsprechende Wärmeenergie dem Reformerprozeß zugeführt wird.

Zweckmäßigerweise wird als Rohstoff eine Wasserstoff enthaltende Substanz, insbesondere Methanol oder Benzin, verwendet.

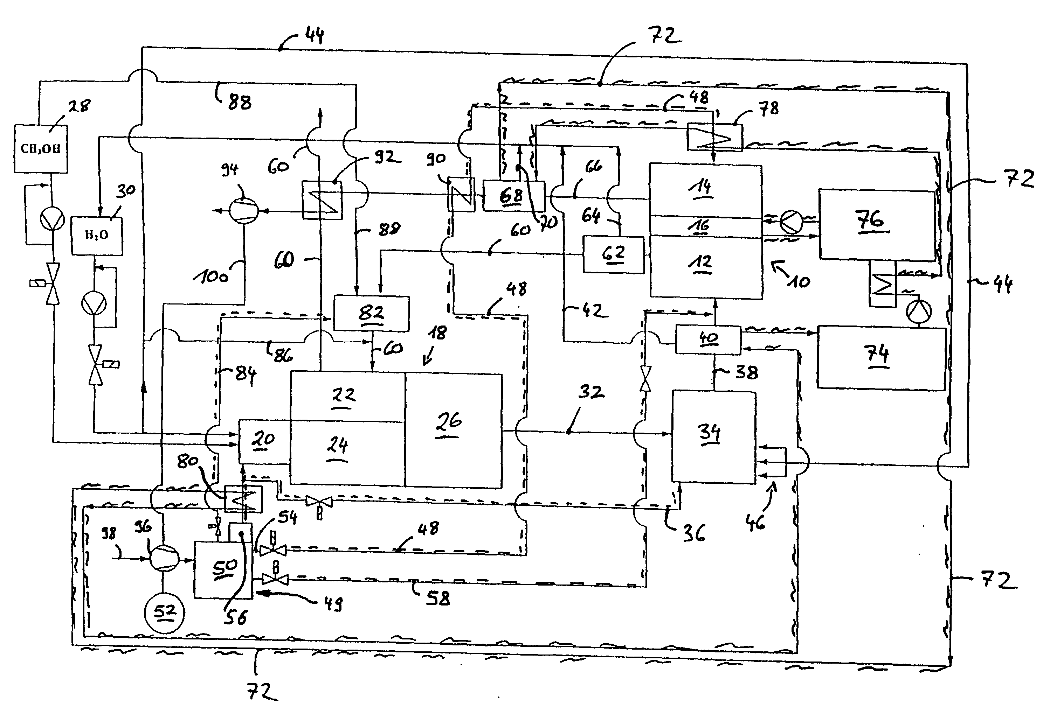

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt ein Blockschaltbild einer bevorzugten Ausführungsform eines erfindungsgemäßen Brennstoffzellensystems.

In diesem Brennstoffzellensystems wird Wasserstoff für eine Brennstoffzelleneinheit 10 mit einer Anode 12, einer Kathode 14 und einem Kühlelement 16 mittels einerautothermen Reformereinheit 18 erzeugt, welche einen Mischer 20, einen Wärmetauscher 22, einen Verdampfer 24 und einen katalytischen Reformer 26 umfaßt. Zur Erzeugung von Wasserstoff wird beispielsweise Methanol als Rohstoff aus einem Methanoltank 28 und Wasser aus einem Wassertank 30 dem Mischer 20 zugeführt. In dem Verdampfer 24 wird das Gemisch aus Methanol und Wasser verdampft und in dem katalytischen Reformer 26 wird in einer katalytischen Reaktion ein Prozeßgas in Form eines Rohgases 32 mit hohem Anteil an Wasserstoff erzeugt.

Dieses Rohgas enthält unter anderem Kohlenmonoxid (CO), welches vor dem Einleiten in die Brennstoffzelleneinheit 10 entfernt werden muß. Hierzu wird das Rohgas 32 in eine Oxidationseinheit 34 geleitet, wo unter Zuführung von Luft über Leitung 36 das Kohlenmonoxid zu Kohlendioxid ($CO_2$) oxidiert wird, so daß sich ein CO-Gehalt kleiner 20 ppm ergibt. Gleichzeitig erfolgt über eine Leitung 44 eine Zuführung von Wasser aus dem Wassertank 30, wobei das zugeführte Wasser mit einer Einspritzvorrichtung 46 in die Oxidationseinheit 34 eingespritzt wird. Dies führt zu einer gleichzeitigen Kühlung des Prozeßgases in der Oxidationseinheit 34. Diesem so erzeugten und abgekühlten Reingas 38 wird in einem AnodengasKondensator 40 Wasser entzogen, welches über Leitung 42 dem Wassertank 30 zurückgeführt wird. Anschließend wird das Reingas 38 mit einem hohen Gehalt an Wasserstoff in die Anode 12 derBrennstoffzelleneinheit 10 geleitet. Das Reingas 38 beinhaltet beispielsweise 50% $H_2$, 25% $N_2$ und 25% $CO_2$ bei einer Temperatur von etwa 180 bis 200 Grad Celsius. In dem AnodengasKondensator 40 wird es weiter auf beispielsweise etwa 85 Grad Celsius vor dem Einleiten in die Anode 12 abgekühlt.

Auf der Kathodenseite 14 wird der Brennstoffzelleneinheit 10 über Leitung 48 aus einem zweistufigen Schraubenkompressor 50 komprimierte Luft zugeführt. Alle Luftleitungen sind in der Fig. mit gestrichelter Linie gekennzeichnet. Auf diese Weise erzeugt die Brennstoffzelleneinheit in bekannter Weise mittels der Reaktion

$$H_2 + ½ \, O_2 \rightarrow H_2O + \text{el. Energie}$$

elektrische Energie, welche an den Elektroden 12, 14 abgreifbar und einem Elektromotor 52 zuführbar ist. Der zweistufige Schraubenkompressor 50 umfaßt eine erste Stufe 54 mit beispielsweise etwa 3 bar Druck für die Kathode 14 und eine zweite Stufe 56 mit beispielsweise 3.7 bar Druck für das der Anode 12 zuzuführende Brenngas, also dem dehydrierten Reingas 38.

Mittels eines weiteren Abgriffes am Schraubenkompressor 50 wird über Leitung 58 komprimierte Luft dem Reingas 38 nach dem Anodengaskondensator 40 zugeführt.

Im Anodenabgasstrom 60 ist ein Wasserseparator 62 angeordnet, welcher aus dem Anodenabgas 60 Wasser separiert und über Leitung 64 dem Wassertank 30 zuführt. Im Kathodenabgasstrom 66 ist ein Kondensator 68 angeordnet, welcher dem Kathodenabgas 66 Wasser entzieht und über Leitung 70 dem Wassertank 30 zuführt. Auf diese Weise ist für das Prozeßgas ein geschlossener Wasserkreislauf ausgebildet, so daß für die Herstellung von Wasserstoff in der Reformereinheit 18 keine großen Wassermengen mitgeführt werden müssen.

Zur Kühlung der Luftzufuhr an den Mischer 20, des AnodengasKondensators 40, des Wasserseparators 62, des Kondensators 68 und der Luftzuführung 48 an die Kathode 14 ist ein separater Wasserkreislauf 72 vorgesehen, welcher mit gewellten Linien gekennzeichnet ist. Dieser separate Wasserkreislauf 72 umfaßt einen Kühlwasserbehälter 74, einen Wasserbehälter mit Deionisation 76 und entsprechende Wärmetauscher 78 und 80 jeweils bei der Luftzuführung 48 an die Kathode 14 und bei der Luftzuführung an den Mischer 20.

Der Anodenabgasstrom 60 strömt in einen katalytischen Brenner 82, in dem das Anodenabgas 60 unter Erzeugung von Wärmeenergie weiter verbrannt wird. Diese Wärmeenergie wird dem Verdampfer 24 und dem katalytischen Reformer 26 mittels des Wärmetauschers 22 weitergegeben und hält dort die katalytische Reaktion zur Erzeugung von Wasserstoff aufrecht. Dem katalytischen Brenner 82 wird über eine Leitung 84 Luft zugeführt. Nach dem katalytischen Brenner 82 wird dem Anodenabgas 60 optional über Leitung 86 Wasser aus dem Wassertank 30 zugeführt. Über eine Leitung 88 ist dem katalytischen Brenner 82 wahlweise Methanol aus dem Methanoltank 28 zuführbar, so daß auch bei nicht ausreichendem Anodenabgasstrom 60, beispielsweise beim Anfahren des Brennstoffzellensystems, eine ausreichende Wärmeenergieerzeugung für die Reformereinheit 18 gewährleistet ist.

Der Kathodenabgasstrom 66 wird in einem Wärmetauscher 90 des separaten Wasserkreislaufes 72 gekühlt und ist anschließend über einen Wärmetauscher 92 thermisch mit dem Anodenabgasströn 60 verbunden, bevor beide Abgasströme 60 und 66 das System verlassen.

Der Kathodenabgasstrom 66 wird dabei über eine Expansionsturbine 94 geleitet. welche zusammen mit einem Kompressor 96 zum Ansaugen von Luft 98, welcher als Eingangsstufe vor dem zweistufigen Kompressor 50 vorgesehen ist, auf einer gemeinsamen Welle 100 angeordnet. Hierdurch wird in dem Kathodenabgasstrom 66 enthaltene Energie für eine Kompression von Luft 98 im Kompressor 96 zurückgewonnen.

Ein besonderer Vorteil dieser Ausführungsform durch hohen Wirkungsgrad und geringen Bauraumbedarf und geringen apparativen Aufwand ergibt sich in der Kombination des zweistufigen Kompressors 50, der autothermen Reformereinheit 18 mit der zusätzlich kühlenden Wassereinspritzung 46 bei der selektiven Oxidation des Kohlenmonoxids (CO) in der Oxidationseinheit 34 zusammen mit einem autarken Wasserkreislauf 30, 40, 42, 62, 64, 68, 70.

**Patentansprüche**

1. Brennstoffzellensystem, insbesondere als Antriebssystem eines Kraftfahrzeuges, mit einer Reformereinheit (18) zum Erzeugen von Wasserstoff aus einem Energieträger, insbesondere einem flüssigen Rohstoff (28) zum Betreiben einer nachgeschalteten Brennstoffzelleneinheit (10), wobei zwischen Reformereinheit (18) und Brennstoffzelleneinheit (10) eine Oxidationseinrichtung (34) zum Umwandeln von Kohlenmonoxid in Kohlendioxid angeordnet ist,
**dadurch gekennzeichnet, daß**
eine Einspritzvorrichtung (26) für Wasser an der Oxidationseinrichtung (34) vorgesehen ist, welche in diese Wasser einspritzt.

2. Brennstoffzellensystem nach Anspruch 1,
**dadurch gekennzeichnet, daß**
die Reformereinheit (18) einen Mischer (20) für den Rohstoff (28) und eine sauerstoffhaltige Substanz (30), insbesondere Wasser und/oder Luft, aufweist.

3. Brennstoffzellensystem nach Anspruch 1 oder 2,
**dadurch gekennzeichnet, daß**
ein zweistufiger Verdichter (49) vorgesehen ist, welcher komprimierte Luft einem Prozeßgas (38) zwischen Oxidationseinrichtung (34) und Brennstoffzelleneinheit (10) und/oder einer Kathode (14) der Brennstoffzelleneinheit (10) zuführt.

4. Brennstoffzellensystem nach einem der vorhergehenden Ansprüche,
**dadurch gekennzeichnet, daß**
in einem Abgasstrom (66) aus einer Kathode (14) der Brennstoffzelleneinheit (10) und/oder in einem Abgasstrom (60) aus einer Anode (12) der Brennstoffzelieneinheit (10) und/oder in einem Reingasstrom (38) aus der Oxidationseinheit (34) eine Wasserseparationseinrichtung (40,62,68), insbesondere ein Kondensator, vorgesehen ist, welcher im entsprechenden Gas (38,60,66) enthaltenes Wasser absepariert und einer der autothermen Reformereinheit (18) vorgeschalteten Wasserspeichereinrichtung (30) zuführt.

5. Brennstoffzellensystem nach Anspruch 4,
**dadurch gekennzeichnet, daß**
ein separater Wasserkreislauf (72) vorgesehen ist, welcher wenigstens eine der Wasserseparationseinrichtungen (40,62,68), die Brennstoffzelleneinheit (10,16), eine Luftzuführung (48) an eine Kathode (14) der Brennstoffzelleneinheit (10) und/oder eine Luftzuführung an die Reformereinheit (18,20) kühlt.

**6.** Brennstoffzellensystem nach einem der vorhergehenden Ansprüche,
**dadurch gekennzeichnet, daß**
ein katalytischer Brenner (82) vorgesehen ist, welcher Abgas (60) aus einer Anode (12) der Brennstoffzelleneinheit (10) verbrennt und entsprechende Abwärme der Reformereinheit (18) über einen Wärmetauscher (22) zuführt.

**7.** Brennstoffzellensystem nach Anspruch 6,
**dadurch gekennzeichnet, daß**
der katalytische Brenner (82) mit einem Vorratsbehälter (28) für den Rohstoff verbunden ist.

**8.** Brennstoffzellensystem nach einem der vorhergehenden Ansprüche,
**dadurch gekennzeichnet, daß**
in einem Abgasstrom (66) einer Kathode (14) der Brennstoffzelleneinheit (10) ein Expander (94) und in einem Zuluftstrom (98) der Brennstoffzelleneinheit (10) ein Kompressor (96), insbesondere eines zweistufigen Kompressors (50), vorgesehen ist, welche auf einer gemeinsamen Welle (100) angeordnet sind.

**9.** Brennstoffzellensystem nach einem der vorhergehenden Ansprüche,
**dadurch gekennzeichnet, daß**
der Rohstoff (28) eine Wasserstoff enthaltende Substanz, insbesondere Methanol oder Benzin, ist.

**10.** Verfahren zum Erzeugen elektrischer Energie mittels eines Brennstoffzellensystems, insbesondere für ein Antriebssystem eines Kraftfahrzeuges, wobei zum Betreiben einer Brennstoffzelleneinheit Wasserstoff in einem Reformerprozeß aus einem Rohstoff erzeugt wird, wobei nach dem Reformerprozeß und vor der Brennstoffzelleneinheit Kohlenmonoxid zu Kohlendioxid oxidiert wird,
**dadurch gekennzeichnet, daß**
bei der Oxidation von Kohlenmonoxid zu Kohlendioxid Wasser eingespritzt wird.

**11.** Verfahren nach Anspruch 10,
**dadurch gekennzeichnet, daß**
das Wasser dampfförmig oder aerosolförmig eingespritzt wird.

**12.** Verfahren nach Anspruch 10 oder 11,
**dadurch gekennzeichnet, daß**
einem Prozeßgas zwischen Oxidation von Kohlenmonoxid und Brennstoffzelleneinheit und/oder einer Kathode der Brennstoffzelleneinheit komprimierte Luft zugeführt wird.

**13.** Verfahren nach einem der Ansprüche 10 bis 12,
**dadurch gekennzeichnet, daß**
aus einem Abgasstrom aus einer Kathode der Brennstoffzelleneinheit und/oder aus einem Abgasstrom aus einer Anode der Brennstoffzelleneinheit Wasser separiert und dem Reformerprozeß zugeführt wird.

**14.** Verfahren nach einem der Ansprüche 10 bis 13,
**dadurch gekennzeichnet, daß**
ein Abgas aus einer Anode der Brennstoffzelleneinheit verbrannt und eine entsprechende Abwärme dem Reformerprozeß zugeführt wird.

**15.** Verfahren nach einem der Ansprüche 10 bis 14,
**dadurch gekennzeichnet, daß**
Rohstoff verbrannt und eine entsprechende Wärmeenergie dem Reformerprozeß zugeführt wird.

**16.** Verfahren nach einem der Ansprüche 10 bis 15,
**dadurch gekennzeichnet, daß**
als Rohstoff eine Wasserstoff enthaltende Substanz, insbesondere Methanol oder Benzin, verwendet wird.

**Claims**

**1.** Fuel cell system, in particular as a drive system for a motor vehicle, having a reformer unit (18) for producing hydrogen from an energy source, in particular a liquid raw material (28) for operating a downstream fuel cell unit (10), an oxidation device (34) for converting carbon monoxide into carbon dioxide being arranged between the reformer unit (18) and the fuel cell unit (10), **characterized in that** a water injection device (26) is provided at the oxidation device (34), which device injects water into the latter.

**2.** Fuel cell system according to Claim 1, **characterized in that** the reformer unit (18) has a mixer (20) for the raw material (28) and an oxygen-containing substance (30), in particular water and/or air.

**3.** Fuel cell system according to Claim 1 or 2, **characterized in that** there is a two-stage compressor (49), which supplies compressed air to a process gas (38) between oxidation device (34) and fuel cell unit (10) and/or to a cathode (14) of the fuel cell unit (10).

**4.** Fuel cell system according to one of the preceding claims, **characterized in that** a water separation device (40, 62, 68), in particular a condenser, which separates water contained in the corresponding gas (38, 60, 66) and supplies a water storage device (30) upstream of the autothermal reformer unit (18), is provided in an exhaust gas flow (66) from a cathode (14) of the fuel cell unit (10) and/or in an exhaust gas flow (60) from an anode (12) of the fuel cell unit (10) and/or in a fresh gas flow (38) from the oxidation unit (34).

5. Fuel cell system according to Claim 4, **characterized in that** a separate water circuit (72) is provided which cools at least one of the water separation devices (40, 62, 68), the fuel cell unit (10, 16), an air feed (48) to a cathode (14) of the fuel cell unit (10) and/or an air feed to the reformer unit (18, 20).

6. Fuel cell system according to one of the preceding claims, **characterized in that** a catalytic burner (82) is provided which burns exhaust gas (60) from an anode (12) of the fuel cell unit (10) and supplies corresponding waste heat to the reformer unit (18) via a heat exchanger (22).

7. Fuel cell system according to Claim 6, **characterized in that** the catalytic burner (82) is connected to a storage container (28) for the raw material.

8. Fuel cell system according to one of the preceding claims, **characterized in that** an expander (94) is provided in an exhaust gas flow (66) from a cathode (14) of the fuel cell unit (10) and a compressor (96), in particular a two-stage compressor (50), is provided in a feeder flow (98) to the fuel cell unit (10), the expander (94) and compressor (96) being arranged on a common shaft (100).

9. Fuel cell system according to one of the preceding claims, **characterized in that** the raw material (28) is a substance containing hydrogen, in particular methanol or petrol.

10. Method for generating electrical energy by means of a fuel cell system, in particular for a drive system of a motor vehicle, hydrogen being produced in a reformer process from a raw material in order to operate a fuel cell unit, carbon monoxide being oxidized to form carbon dioxide downstream of the reformer process and upstream of the fuel cell unit, **characterized in that** water is injected during the oxidation of carbon monoxide to form carbon dioxide.

11. Method according to Claim 10, **characterized in that** the water is injected in vapour form or aerosol form.

12. Method according to Claim 10 or 11, **characterized in that** compressed air is supplied to a process gas between the oxidation of carbon monoxide and the fuel cell unit and/or to a cathode of the fuel cell unit.

13. Method according to one of Claims 10 to 12, **characterized in that** water is separated from an exhaust gas flow from a cathode of the fuel cell unit and/or from an exhaust gas flow from an anode of the fuel cell unit and is supplied to the reformer process.

14. Method according to one of Claims 10 to 13, **characterized in that** an exhaust gas from an anode of the fuel cell unit is burnt and corresponding waste heat is supplied to the reformer process.

15. Method according to one of Claims 10 to 14, **characterized in that** raw material is burnt and corresponding heat energy is supplied to the reformer process.

16. Method according to one of Claims 10 to 15, **characterized in that** the raw material is a substance containing hydrogen, in particular methanol or petrol.

**Revendications**

1. Système à pile à combustible, en particulier comme système d'entraînement d'un véhicule à moteur, présentant une unité de reformage (18) pour la production d'hydrogène à partir d'un support d'énergie, en particulier d'un produit de départ (28) liquide, pour le fonctionnement d'une unité à pile à combustible (10) disposée en aval, un dispositif d'oxydation (34) pour la transformation de monoxyde de carbone en dioxyde de carbone étant disposé entre l'unité de reformage (18) et l'unité à pile à combustible (10), **caractérisé en ce qu'**on a prévu un dispositif d'injection (26) d'eau sur le dispositif d'oxydation (34), qui injecte de l'eau dans celui-ci.

2. Système à pile à combustible selon la revendication 1, **caractérisé en ce que** l'unité de reformage (18) présente un mélangeur (20) pour le produit de départ (28) et une substance contenant de l'oxygène, en particulier de l'eau et/ou de l'air.

3. Système à pile à combustible selon la revendication 1 ou 2, **caractérisé en ce qu'**on a prévu un compresseur (49) à deux étages qui amène à un gaz de traitement (38) de l'air comprimé entre le dispositif d'oxydation (34) et l'unité à pile à combustible (10) et/ou à une cathode (14) de l'unité à pile à combustible (10).

4. Système à pile à combustible selon l'une quelconque des revendications précédentes, **caractérisé en ce qu'**on a prévu dans un flux (66) d'effluents gazeux provenant d'une cathode (14) de l'unité à pile à combustible (10) et/ou dans un flux (60) d'effluents gazeux provenant d'une anode (12) de l'unité à pile à combustible (10) et/ou dans un flux (38) de gaz pur provenant de l'unité d'oxydation (34), un dispositif de séparation d'eau (40, 62, 68), en particulier un condenseur, qui sépare l'eau contenue dans le gaz correspondant (38, 60, 66) et l'introduit dans un dispositif d'accumulation d'eau (30) disposé en amont de l'unité de reformage (18) autothermique.

5. Système à pile à combustible selon la revendication 4, **caractérisé en ce qu'**on a prévu un circuit d'eau (72) séparé, qui refroidit au moins un des dispositifs de séparation d'eau (40, 62, 68), l'unité à pile à combustible (10, 16), une alimentation en air (48) sur une cathode (14) de l'unité à pile à combustible (10) et/ou une alimentation en air sur l'unité de reformage (18, 20).

6. Système à pile à combustible selon l'une quelconque des revendications précédentes, **caractérisé en ce qu'**on a prévu un brûleur (82) catalytique, qui brûle les effluents gazeux (60) provenant d'une anode (12) de l'unité à pile à combustible (10) et qui introduit la chaleur dissipée correspondante dans l'unité de reformage (18) via un échangeur de chaleur (22).

7. Système à pile à combustible selon la revendication 6, **caractérisé en ce que** le brûleur (82) catalytique est raccordé à un réservoir (28) pour le produit de départ.

8. Système à pile à combustible selon l'une quelconque des revendications précédentes, **caractérisé en ce qu'**on a prévu dans un flux (66) d'effluents gazeux provenant d'une cathode (14) de l'unité à pile à combustible (10) un dispositif d'expansion (94) et dans un flux (98) d'air introduit dans l'unité à pile à combustible (10) un compresseur (96), en particulier un compresseur (50) à deux étages, qui sont disposés sur un arbre (100) commun.

9. Système à pile à combustible selon l'une quelconque des revendications précédentes, **caractérisé en ce que** le produit de départ (28) est une substance contenant de l'hydrogène, en particulier du méthanol ou de l'essence.

10. Procédé pour la production d'énergie électrique au moyen d'un système à pile à combustible, en particulier pour un système d'entraînement d'un véhicule à moteur, de l'hydrogène étant produit dans un processus de reformage à partir d'un produit de départ pour le fonctionnement d'une unité à pile à combustible, le monoxyde de carbone étant oxydé en dioxyde de carbone après le processus de reformage et avant l'unité à pile à combustible, **caracté-**

**risé en ce que** de l'eau est injectée lors de l'oxydation de monoxyde de carbone en dioxyde de carbone.

11. Procédé selon la revendication 10, **caractérisé en ce que** l'eau est injectée sous forme de vapeur ou d'aérosol.

12. Procédé selon la revendication 10 ou 11, **caractérisé en ce qu'**un gaz de procédé est alimenté entre l'oxydation du monoxyde de carbone et l'unité à pile à combustible et/ou qu'une cathode de l'unité à pile à combustible est alimentée en air comprimé.

13. Procédé selon l'une quelconque des revendications 10 à 12, **caractérisé en ce que** de l'eau est séparée d'un flux d'effluents gazeux provenant d'une cathode de l'unité à pile à combustible et/ou d'un flux d'effluents gazeux provenant d'une anode de l'unité à pile à combustible et est introduite dans le processus de reformage.

14. Procédé selon l'une quelconque des revendications 10 à 13, **caractérisé en ce qu'**un effluent gazeux provenant d'une anode de l'unité à pile à combustible est brûlé et qu'une chaleur dissipée correspondante est introduite dans le processus de reformage.

15. Procédé selon l'une quelconque des revendications 10 à 14, **caractérisé en ce que** le produit de départ est brûlé et qu'une énergie thermique correspondante est introduite dans le processus de reformage.

16. Procédé selon l'une quelconque des revendications 10 à 15, **caractérisé en ce qu'**on utilise comme produit de départ une substance contenant de l'hydrogène, en particulier du méthanol ou de l'essence.